# EUROPÄISCHE PATENTSCHRIFT

(11) **EP 3 819 100 B1**
(45) Veröffentlichungstag und Bekanntmachung des Hinweises auf die Patenterteilung: **11.08.2021**
(21) Anmeldenummer: 19207967.1
(22) Anmeldetag: 08.11.2019
(51) Int. Cl.: B29C 64/124, B29C 64/194, B29C 64/214, B33Y 10/00, B33Y 30/00, B33Y 40/10, B33Y 70/00

(54) **VERFAHREN ZUM GENERATIVEN AUFBAU VON FORMKÖRPERN DURCH STEREOLITHOGRAPHIE**
METHOD FOR THE GENERATIVE CONSTRUCTION OF SHAPED BODIES BY MEANS OF STEREOLITHOGRAPHY
PROCÉDÉ DE CONSTRUCTION GÉNÉRATIVE DE CORPS MOULÉS PAR STÉRÉOLITHOGRAPHIE

(43) Veröffentlichungstag der Anmeldung: 12.05.2021
(73) Patentinhaber: Ivoclar Vivadent AG, 9494 Schaan (LI); Technische Universität Wien, 1040 Wien (AT)
(72) Erfinder: John, Hendrik, 9470 Buchs SG (CH); Ebert, Jörg, 9470 Buchs (AT); Rist, Kai, 6800 Feldkirch (AT); Baumgartner, Sonja, 1050 Wien (AT); Hartmann, Malte, 1070 Wien (AT)
(74) Vertreter: Uexküll & Stolberg

(56) Entgegenhaltungen:
- EP-A1- 2 671 706
- WO-A1-2015/152744
- CN-A- 108 081 611
- GB-A- 2 262 817
- US-A1- 2014 044 824
- US-A1- 2018 141 268

## Beschreibung

Die vorliegende Erfindung betrifft ein Verfahren zum generativen Aufbau von Formkörpern durch schichtweises Aushärten von viskosem, photopolymerisierbarem Baumaterial durch Stereolithographie.

Das Baumaterial kann ein Keramikschlicker auf organischer Basis sein - d.h. ein fließfähiges oder nicht mehr fließfähiges, pastöses photopolymerisierbares Material, das mit Keramikpartikeln gefüllt ist, wodurch sich mit steigendem Anteil an Keramikpartikeln die Viskosität erhöht - oder aus hochviskosen lichthärtenden Kompositen oder Photopolymeren bestehen. Bei Verwendung von Keramikschlickern als Baumaterial wird als Formkörper ein Grünling erzeugt, der dann durch Entbindern und Sintern zu einem Keramikkörper weiterverarbeitet wird. Die vorliegende Erfindung ist insbesondere im Zusammenhang mit der Herstellung von Dentalrestaurationen anwendbar.

Um bei Dentalrestaurationen ästhetisch zufriedenstellende Resultate zu erhalten, ist es oft erwünscht, ortsabhängig mit variierenden Baumaterialien und/oder ortsabhängig mit variierenden Einfärbungen des Baumaterials zu arbeiten. Bei herkömmlichen Stereolithographie-Prozessen zum schichtweisen Aufbau von Keramikschlicker zu einem Grünling ist es bekannt, das im Aufbau befindliche Bauteil nach Aushärten der aktuellen Schicht aus dem Baubereich herauszudrehen und dann durch ein Tintenstrahldruckverfahren die gerade ausgehärtete Schicht mit einem pigmentierten Photopolymer selektiv einzufärben. Ein solcher Prozess ist z.B. aus WO 2013/182547 A1 bekannt, bei dem an einem trommelförmigen Träger um dessen Umfang herum in 90° Abständen vier Bauplattformen angeordnet sind. Um den trommelförmigen Träger herum sind Bearbeitungsstationen ebenfalls in 90° Abständen verteilt. Zu den Bearbeitungsstationen gehören eine Wanne mit transparentem Boden, unter der eine Belichtungseinheit angeordnet ist, ein Tintenstrahldrucker zum Bedrucken der zuletzt gehärteten Schicht mit einem pigmentierten Photopolymer und eine weitere Belichtungseinheit zum Aushärten des ortselektiv aufgedruckten pigmentierten Photopolymers. Der trommelförmige Träger ist drehbar aufgehängt, so dass jeweils eine Bauplattform im Bereich einer der Bearbeitungsstationen ist und bearbeitet wird. Nach den Bearbeitungsschritten in den jeweiligen Bearbeitungsstationen wird der trommelförmige Geräteträger um 90° gedreht, so dass an dem jeweiligen Bauteil an den Bauplattformen der nächste Bearbeitungsschritt aufgeführt werden kann. Obwohl in diesem Verfahren Bearbeitungsschritte parallel an Bauteilen an mehreren Bauplattformen ausgeführt werden können, ist der Prozess sehr zeitintensiv, wobei viel Zeit für die mechanische Bewegung der Bauplattformen zwischen den Bearbeitungsstationen vergeht.

Alternativ können für die Aushärtung einer Schicht verschiedene Materialien verwendet werden, die in verschiedenen Wannen bereitgehalten sind. Dann wird die Bauplattform nacheinander zu verschiedenen Wannen abgesenkt, um nacheinander Teilbereiche der auszuhärtenden Schicht mit verschiedenen Baumaterialien in den verschiedenen Wannen auszuhärten. Ein solches Verfahren ist in DE 10 2007 010 624 B4 beschrieben. Um Kreuzkontamination (Übertragung einer Menge eines Baumaterials in eine Wanne mit anderem Baumaterial) zu vermeiden, muss nach Anheben des in Aufbau befindlichen Bauteils mit der Bauplattform das Bauteil gereinigt werden, bevor es in ein anderes Baumaterial in der nächsten Wanne abgesenkt wird. Da deshalb bei jedem Baumaterialwechsel eine Reinigungsprozedur durchgeführt werden muss, ist auch dieses Verfahren zeitaufwendig. Darüber hinaus ist auch der Transport zum Wechseln zwischen verschiedenen Wannen zeitaufwendig.

DE 10 2011 117 005 B4 betrifft ein Verfahren zur Herstellung einer keramischen Dentalrestauration auf Basis eines generativen Herstellungsverfahrens, bei dem einzelne Schlickerschichten sukzessive lagenweise abgeschieden und verfestigt werden. Nach dem Abscheiden einer Schlickerschicht wird diese durch eine Rakel in ihrer Schichtdicke auf eine gewünschte Schichtdicke reduziert und dabei geglättet, wonach eine ortsselektive Abscheidung wenigstens einer Tintenflüssigkeit erfolgt. Dabei beinhaltet die Tintenflüssigkeit neben dem Färbemittel auch einen Initiator, der die chemische Reaktion zur Verfestigung der Schlickerschicht auslöst, so dass Einfärbung und Aushärtung simultan erfolgen.

US 9,975,323 B2 betrifft ganz allgemein aufbauende 3D Druckverfahren, wobei auch aufbauende Verfahren, bei denen eine Flüssigkeit in einer Wanne durch einen Laser oder eine andere Energiequelle ortsselektiv verfestigt wird, erwähnt sind. Das beschriebene Verfahren stellt als Besonderheit heraus, dass selektiv Schichten übereinander gebildet werden, wobei das aus übereinander liegenden Schichten aufgebaute Volumen aus einer Vielzahl von nebeneinander liegenden Säulen mit übereinander liegenden Voxel-Elementen (Volumen-Pixelelementen) besteht und in jeder Säule die Einfärbung/Transparenz jedes der übereinander liegenden Voxel-Elemente selektiv erzeugt ist. Spezifische Einzelheiten, wie die individuelle Farbgebung der einzelnen Voxel-Elemente einer gebildeten Schicht für jedes Voxel-Element individuell erzeugt wird, sind nicht angegeben.

EP 2 337 667 B1 und US 2014/044824 A1 offenbaren ein Verfahren nach dem Oberbegriff von Patentanspruch 1. Bei dem Verfahren wird viskoses, photopolymerisierbares Baumaterial auf einen ebenen, transparenten Boden einer Wanne ausgegeben. In einstellbarer Lage über dem Wannenboden ist eine Rakel aufgehängt. Die Wanne wird parallel zur Ebene des Wannenbodens relativ zur Rakel bewegt, so dass ausgegebenes Baumaterial unter der Rakel hindurch geschoben wird, wodurch eine geglättete Schicht mit einer durch die Lage der Rakel zum Wannenboden vorbestimmten, gleichmäßigen Schichtdicke geformt wird. Dies kann zum Beispiel geschehen, indem die Wanne um eine zum Wannenboden senkrechte Drehachse gedreht wird, so dass der Wannenboden unter der sich nicht drehenden Rakel bewegt wird und dadurch ausgegebenes Baumaterial sich vor der Rakel staut und nur ein Teil davon die Rakel passiert, so dass dieser passierende Teil des Baumaterials zu einer geglätteten Schicht mit vorbestimmter, gleichmäßiger Schichtdicke geformt wird. Die geglättete Schicht wird durch relatives Bewegen der Wanne zu einem Bereich zwischen einer unterhalb des Wannenbodens angeordneten Belichtungseinheit und einer oberhalb der Wanne höhenverfahrbar aufgehängten Bauplattform gebracht. Anschließend wird die Bauplattform relativ zum Wannenboden präzise gesteuert abgesenkt, so dass unter Verdrängung von Baumaterial aus der geglätteten Schicht die verbleibende Schicht im Zwischenraum auf eine vorgegebene Schichtdicke eingestellt wird, die durch den Abstand der unteren Oberfläche der Bauplattform (oder der unteren Oberfläche der zuletzt ausgehärteten Schicht) zum Wannenboden bestimmt ist. Auf diese Weise kann die vorgegebene Schichtdicke mit hoher Genauigkeit eingestellt werden. Daraufhin wird die Schicht mit vorgegebener Schichtdicke durch gesteuerten Betrieb der Belichtungseinheit ortselektiv mit einer für die aktuelle Schicht gewünschten Kontur durch Belichten ausgehärtet. Schließlich wird die Bauplattform angehoben, Baumaterial auf den Wannenboden ausgegeben und werden die Schritte b) bis f) wiederholt, bis der Formkörper durch eine Vielzahl von übereinander ausgehärteten Schichten gebildet ist.

Ein entsprechendes Verfahren wie zuvor beschrieben und mit den Merkmalen des Oberbegriffs von Anspruch 1 ist aus CN 108081611 A bekannt.

Es ist Aufgabe der vorliegenden Erfindung, ein Verfahren der oben beschriebenen Art so ausführbar zu machen, dass es auch mit Baumaterialien hoher Viskosität schnell und präzise durchführbar ist, und das es ermöglicht, dass die sukzessive gebildeten Schichten des Formkörpers in effektiver Weise ortsselektiv eingefärbt werden können.

Diese Aufgabe wird durch das Verfahren mit den Merkmalen des Patentanspruchs 1 gelöst. Vorteilhafte Ausführungsformen sind in den Unteransprüchen angegeben.

Es wird daher ein Verfahren zum Aufbau eines Formkörpers durch schichtweises Aushärten von viskosem, photopolymerisierbarem Baumaterial mittels Stereolithographie bereitgestellt, bei dem
a) Baumaterial auf einen ebenen, transparenten Boden einer Wanne ausgegeben wird,
b) die Wanne relativ zu einer Rakel, die in einstellbarer Lage über dem Wannenboden aufgehängt ist, parallel zur Ebene des Wannenbodens bewegt wird, so dass das ausgegebene Baumaterial unter der Rakel hindurch bewegt wird, um eine geglättete Schicht mit einer durch die Lage der Rakel zum Wannenboden vorbestimmten, gleichmäßigen Schichtdicke zu formen,
c) die geglättete Schicht durch relatives Bewegen der Wanne zu einem Bereich zwischen einer unterhalb des Wannenbodens angeordneten Belichtungseinheit und einer oberhalb der Wanne höhenverfahrbar aufgehängten Bauplattform gebracht wird,
d) die Bauplattform relativ zum Wannenboden gesteuert abgesenkt wird, so dass unter Verdrängung von Baumaterial die verbleibende Schicht im Zwischenraum auf eine vorgegebene Schichtdicke gebracht wird,
e) die Schicht durch gesteuerten Betrieb der Belichtungseinheit ortselektiv mit einer für die aktuelle Schicht gewünschten Kontur ausgehärtet wird,
f) wonach die Bauplattform angehoben, Baumaterial auf den Wannenboden ausgegeben wird und die Schritte b) bis f) wiederholt werden, bis der Formkörper durch eine Vielzahl von übereinander ausgehärteten Schichten gebildet ist.

Erfindungsgemäß ist die Lage der Rakel zum Wannenboden so eingestellt, dass die resultierende vorbestimmte, gleichmäßige Schichtdicke größer als die durch Herunterfahren der Bauplattform einzustellende vorgegebene Schichtdicke ist, diese aber um nicht mehr als 50% überschreitet. Mit anderen Worten wird das auf den Wannenboden ausgegebene Baumaterial durch relative Bewegung zu der in eingestellter Lage über dem Wannenboden liegenden Rakel bereits auf eine vorbestimmte gleichmäßige Schichtdicke gebracht, die oberhalb von, aber bereits nahe an (höchstens 50% über) der durch Herunterfahren der Bauplattform einzustellenden, vorgegebenen Schichtdicke liegt. Erfindungsgemäß ist weiter vorgesehen, die Oberfläche der geglätteten Dünnschicht in einem Zwischenschritt vor Absenken der Bauplattform und vor der ortsselektiven Belichtung durch ortsselektives Aufbringen von ausgewählten Einfärbemitteln ortsselektiv einzufärben. Dabei sind die Einfärbemittel zur Einstellung der Farbe und der Transluzenz des Bauteils an das jeweils verwendete Baumaterial angepasst wie folgt ausgewählt:
a) bei Photopolymeren als Baumaterial: Lösungen mit Farbstoffmolekülen und/oder Suspensionen mit Pigmenten,
b) bei Glaskeramikschlicker als Baumaterial: Farbpigmente, insbesondere Oxide, Zinnoxide oder Zirkonoxide, dispergiert in einem organischen Träger,
c) bei Zro₂-Schlicker als Baumaterial: Nitratsalzlösungen (wässrige Lösungen oder auf anderer Lösungsmittel) oder in Ethanol gelöste Acetylacetonate.

Es ist vorteilhaft, wenn die durch die Lage der Rakel zum Wannenboden vorbestimmte Schichtdicke in gewissem Maße die durch die Bauplattform einzustellende, vorgegebene Schichtdicke überschreitet, denn dadurch ist in jedem Fall sichergestellt, dass auch bei Auftreten eventueller Toleranzen in der Definition der vorbestimmten Schichtdicke durch die Rakel (insbesondere lokales Unterschreiten der vorbestimmten Schichtdicke) überall im Gebiet der zu definierenden Schicht genügend Baumaterial vorhanden ist, so dass überall durch Herunterfahren der Bauplattform noch die vorgegebene Schichtdicke eingestellt werden kann. Mit anderem Worten ist über die ganze Fläche der Schicht an jedem Ort genügend Baumaterial vorhanden, so dass die Unterseite der Bauplattform (bzw. der zuletzt ausgehärteten Schicht) überall in Kontakt mit Baumaterial kommt, wenn die Lücke zum Wannenboden auf die vorgegebene Schichtdicke eingestellt wird. Für viele Baumaterialien, insbesondere für solche mit niedriger oder mittlerer Viskosität, lässt sich die vorbestimmte, gleichmäßige Schichtdicke über die gesamte Fläche der Schicht problemlos einheitlich realisieren. Bei Baumaterialien mit höherer Viskosität kann es jedoch zu gewissen Variationen der tatsächlichen Schichtdicke über die Fläche der Schicht kommen, so dass die tatsächlichen Schichtdicken als Funktion des Ortes in der Schichtfläche eine Verteilung von Schichtdicken ergeben, die jedoch sehr schmal ist und eine sehr geringe Halbwertsbreite um die mittlere Schichtdicke hat. In solchen Fällen wird die "vorbestimmte, gleichmäßige Schichtdicke" als die mittlere Schichtdicke der Verteilung angesehen, wobei auch dann die Bezeichnung "gleichmäßige Schichtdicke" gerechtfertigt ist, da die Standardabweichung der Dickenverteilung jedenfalls klein gegenüber der mittleren Schichtdicke ist. In solchen Fällen ist es bevorzugt, dass die vorbestimmte, gleichmäßige (mittlere) Schichtdicke etwas größer als die durch Herunterfahren der Bauplattform einzustellende vorgegebene Schichtdicke gewählt wird, z.B. um drei Standardabweichungen der Verteilung, so dass praktisch an allen Orten der Schicht die Bauplattform beim Herunterfahren auf die einzustellende vorgegebene Schichtdicke auf Baumaterial trifft. Alternativ kann die vorbestimmte Schichtdicke auch näher an der vorgegebenen Schichtdicke liegen und durch seitliches Verdrängen von Baumaterial beim Herunterfahren der Bauplattform ein Ausgleich über die Schicht erreicht werden.

Andererseits wird dadurch, dass das Baumaterial durch die Rakel bereits auf eine sehr geringe vorbestimmte Schichtdicke gebracht wird, die die durch die Blauplattform einzustellende vorgegebene Schichtdicke um höchstens 50% übersteigt, dafür gesorgt, dass die durch die Rakel geformte vorbestimmte, gleichmäßige Schichtdicke bereits nahe an der durch die Bauplattform einzustellenden vorgegebenen Schichtdicke liegt und dass demzufolge durch Herunterfahren der Bauplattform nur wenig Baumaterial aus dem Zwischenraum verdrängt werden muss. Dabei ist zu berücksichtigen, dass bei Verwendung von hochviskosem Baumaterial beim Herunterfahren der Bauplattform und bei der Verdrängung von Baumaterial aus dem verbleibenden Zwischenraum hohe Kräfte notwendig sind, um hochviskoses Baumaterial zu verdrängen. Sind die maximal zulässig aufbringbaren Kräfte durch das Wannenmaterial beschränkt (gegebenenfalls um Bruch oder andere Beschädigungen des Wannenbodens zu vermeiden), muss die Bauplattform langsam heruntergefahren werden, um die Kräfte zu begrenzen. Dadurch nimmt das Herunterfahren der Bauplattform zum Einstellen der vorgegebenen Schichtdicke bei hochviskosem Baumaterial viel Zeit in Anspruch. Umgekehrt verringert sich durch Verringerung der maximal zu verdrängenden Menge von Baumaterial die dazu benötigte Zeit. Eine enge Begrenzung der maximal zu verdrängenden Menge von Baumaterial dadurch, dass das ausgegebene Baumaterial durch die Rakel bereits in eine Schicht mit gleichmäßiger, vorbestimmter Schichtdicke von maximal 150% der durch die Bauplattform einzustellenden vorgegebenen Schichtdicke geformt ist, erlaubt daher ein schnelles Einstellen der Schichtdicke durch Herunterfahren der Bauplattform und damit eine kürzere Zykluszeit.

Eine geringe Menge von bei der Einstellung der vorgegebenen Schichtdicke durch die Bauplattform zu verdrängendem Baumaterial hat den weiteren Vorteil, dass nach dem Aushärten einer Schicht zum Anheben der Bauplattform geringere Abzugskräfte nötig sind im Vergleich zu Situationen, in denen größere Baumaterialmengen zum Einstellen der vorgegebenen Schichtdicke verdrängt wurden. Beim Anheben der Bauplattform müssen die dazu benötigten Abzugskräfte einen Unterdruck überwinden, weil das zwischen der unteren Oberfläche des im Aufbau befindlichen Bauteils und dem Wannenboden beim Anheben entstehende Volumen durch nachfließende Luft gefüllt werden muss. Im Fall einer großen Menge von verdrängtem Baumaterial bildet dieses verdrängte Baumaterial einen die Bauplattform und das im Aufbau befindliche Bauteil umgebenden Sperrwall, der den Zufluss von Umgebungsluft in das über dem Wannenboden beim Anheben der Bauplattform entstehende Volumen behindert. Durch Minimierung der Menge von verdrängtem Baumaterial wird der Zufluss von Umgebungsluft in das über dem Wannenboden entstehende Volumen erleichtert und dadurch die Abzugskräfte zum Anheben der Bauplattform verringert.

Größere Mengen von beim Einstellen der vorgegebenen Schichtdicke durch Absenken der Bauplattform verdrängtem Baumaterial wirken sich außerdem negativ auf die Präzision der Abmessungen von stereolithographisch hergestellten Bauteilen aus, insbesondere auf die Präzision in z-Richtung (Richtung senkrecht zur Ebene des Wannenbodens). Bei einem "Bottom-Up" Prozess wie im Fall der vorliegenden Erfindung ist die auszuhärtende Schicht zwischen Bauplattform (oder der unteren Oberfläche des im Aufbau befindlichen Bauteils, wenn bereits eine oder mehrere Schichten ausgehärtet sind) und Wannenbodenoberfläche eingefasst. Die Höhe dieses Zwischenraums oder Spalts bestimmt die vorgegebene Schichtdicke der auszuhärtenden Schicht. In diesem Bereich ist die maximale Durchhärtungstiefe also durch die Spalthöhe (vorgegebene Schichtdicke) festgelegt, auch wenn die Eindringtiefe des Lichtes bei den gewählten Belichtungsparametern (Intensität und Belichtungsdauer) und in Abhängigkeit vom Baumaterial eine größere Durchhärtungstiefe verursachen würde. In dem Fall, dass die aktuell auszuhärtende Schicht seitlich über die letzte zuvor ausgehärtete Schicht hinausragt, gelangt verdrängtes Baumaterial beim Einstellen der Schichtdicke der aktuell auszuhärtenden Schicht auch in die Bereiche, in der die aktuell auszuhärtende Schicht über die letzte zuvor ausgehärtete Schicht hinausragt, was eine zu große Materialmenge und eine zu große Schichtdicke in diesen vorkragenden Bereichen der aktuell auszuhärtenden Schicht mit sich bringt. Da die tatsächliche Durchhärtungstiefe der Belichtung immer größer ist als die vorgegebene Schichtdicke ist, kommt es in diesen Bereichen zu Aushärtung von Material über die eigentliche Schichtdicke hinaus in z-Richtung im Bereich der zuletzt zuvor ausgehärteten Schicht, was einen Präzisionsverlust (Übermaß) in z-Richtung in der Größenordnung mehrerer Schichtdicken bedeuten kann. Die Minimierung von verdrängtem Baumaterial, bzw. die optimale Anpassung der vorbestimmte Schichtdicke durch die Rakel an die durch die Bauplattform einzustellende vorgegebene Schichtdicke, bringt daher auch eine Verbesserung der Präzision des herzustellenden Bauteils mit sich. Generell ist es in jedem Fall von Vorteil, die Menge an verdrängtem Baumaterial so gering wie möglich zu halten, indem die durch die Lage der Rakel vorbestimmte Schichtdick an die von der Bauplattform einzustellende, vorgegebene Schichtdicke angenähert wird.

Am Ende des Bauvorgangs befinden sich grundsätzlich Reste von verdrängtem, überschüssigem und nicht ausgehärteten Baumaterial am Bauteil. Es bedarf also einer Reinigungsprozedur, insbesondere wenn das Bauteil einem thermischen Nachbearbeitungsprozess wie Entbinderung oder Sintern unterzogen werden soll. Reinigungsvorgänge bei generativen Fertigungsprozessen sind nicht trivial. Bei kompliziert geformten Bauteilen sind sehr kleine Zwischenräume oder Hohlräume nur unter großem Aufwand für die Reinigungsflüssigkeiten zugänglich. Außerdem können Lösungsmittel, die Monomergemische gut entfernen, unter Umständen die Bauteiloberfläche schädigen, und im Fall von Suspensionen (Schlickern) könnte Füllstoff zurückbleiben. Durch eine möglichst geringe Menge von insgesamt beim Bauvorgang verdrängtem Baumaterial lässt sich also auch die Menge von an dem Bauteil am Ende anhaftendem überschüssigem Baumaterial verringern, was den Aufwand der Reinigungsprozedur verringert. Diese Gesichtspunkte gelten erst recht, wenn das im Aufbau befindliche Bauteil während des Bauvorgangs zwischen verschiedenen Wannen mit unterschiedlichen Baumaterialien wechselt, denn in diesen Fällen müsste bei jedem Materialwechsel grundsätzlich eine Reinigung erfolgen, bevor das im Aufbau befindliche Bauteil in die nächste Wanne mit anderem Baumaterial überführt wird. Bei deutlicher Minimierung der Menge von beim Einstellen der Schichtdicke verdrängtem Baumaterial kann auch auf die Reinigung bei Materialwechseln verzichtet werden, wenn eine geringfügige Verunreinigung durch geringe Reste von noch am Bauteil anhaftendem Baumaterial, das dann in Kontakt mit einem anderen Baumaterial in der nächsten Wanne kommt, in Kauf genommen werden kann.

Vorzugsweise wird die Lage der Rakel zum Wannenboden so eingestellt, dass die resultierende vorbestimmte, gleichmäßige Schichtdicke im Bereich von 110 bis 130% der durch das Herunterfahren der Bauplattform einzustellenden, vorgegebenen Schichtdicke liegt.

In einer bevorzugten Ausführungsform wird die relative Bewegung von Wanne und Rakel zueinander durch Drehen der Wanne um eine senkrecht zum Wannenboden stehende, mittige Achse gegenüber einer ortsfest aufgehängten Rakel oder durch Drehen der Rakel um die genannte Achse relativ zu einer ortsfest gehaltenen Wanne bewirkt. Im Falle einer relativ zur ortsfesten Rakel drehbaren Wanne kann der Wannenboden die Form einer Kreisscheibe haben, durch deren Zentrum die Drehachse verläuft. Die ortsfest aufgehängte Rakel hat eine Richtungskomponente radial zur Drehachse und verläuft von einem radial nächsten Punkt zur Drehachse nach außen.

In einer bevorzugten Ausführungsform ist die Lage der Rakel über dem Wannenboden durch den Verlauf einer mit einer geradlinigen Unterkante der Rakel zusammenfallenden Geraden definiert. Diese Gerade hat einen minimalen Abstand zum Wannenboden am in radialer Richtung zur Drehachse nächsten Punkt der Rakelunterkante zur Drehachse. Der Verlauf der Geraden ist weiter definiert durch einen Haltewinkel, der zwischen der Geraden der Unterkante und einer von der Geraden geschnittenen Ebene parallel zum Wannenboden definiert ist und der größer als 0° und kleiner als 15° ist. Ein Haltewinkel größer als 0° hat zur Folge, dass der vertikale (zum Wannenboden senkrechte) Abstand der Unterkante zum Wannenboden von dem in radialer Richtung zur Drehachse nächsten Punkt der Rakelunterkante vom Minimalabstand ausgehend mit zunehmendem radialem Abstand zur Drehachse ansteigt.

Die Rakel kann eine ebene Rakelklinge aufweisen, die eine Ebene definiert, die in einem Zustellwinkel zum Wannenboden orientiert ist, der zwischen 0° und 90° liegt. Vorzugsweise ist die ebene Rakelklinge zum Wannenboden geneigt, wobei der Zustellwinkel vorzugsweise im Bereich von 30° bis 75° liegt und relativ zur Bewegungsrichtung zwischen Wannenboden und Rakel so definiert ist, dass die Unterkante der Rakel in Richtung der relativen Bewegung hinter einer oberen Kante der Rakel herläuft.

Alternativ zur relativen Drehbewegung von Wanne und Rakel kann die relative Bewegung von der Wanne zur Rakel durch lineares Verschieben der Wanne oder lineares Verschieben der Rakel bewirkt werden. In einer solchen Ausführungsform ist es bevorzugt, dass die Lage der Rakel über dem Wannenboden durch die mit einer geradlinigen Unterkante der Rakel zusammenfallenden Geraden definiert ist, die in konstantem Abstand und parallel zum Wannenboden verläuft.

Es kann sinnvoll sein, das Baumaterial und die Wannenbodenoberfläche bezüglich ihrer Grenzflächenspannung aufeinander einzustellen, um zu gewährleisten, dass so der gesamte Wannenboden mit Baumaterial benetzt wird und es keine Fehlstellen gibt und somit das Baumaterial den Wannenboden nach dem Auftrag vollflächig benetzt. Dies kann dadurch erfolgen, dass die Oberflächenspannung des Baumaterials durch Additive wie Entschäumer oder Tenside eingestellt wird und/oder dass die Oberfläche des Wannenbodens entsprechend modifiziert wird, wie zum Beispiel durch Silanisierung.

Es ist bevorzugt, dass die Einfärbemittel in einer Tinte gelöst und/oder dispergiert sind und über ein Tintenstrahldruckverfahren ortsselektiv auf die geglättete Schicht aufgebracht werden.

In einer bevorzugten Ausführungsform sind die Einfärbemittel licht- oder thermisch-härtend und werden nach ortsselektiver Aufbringung auf die geglättete Schicht durch elektromagnetische Strahlung fixiert, wobei die zum Fixieren verwendete elektromagnetische Strahlung außerhalb des Absorptionsspektrums des Fotoinitiators des Baumaterials liegt.

In einer bevorzugten Ausführungsform wird als Rakel eine Rakel aus Polytetrafluorethylen verwendet und wird für eine umlaufende Seitenwand der Wanne eine Seitenwand aus Polytetrafluorethylen verwendet.

Vorzugsweise wird als Wannenboden eine Scheibe aus Glas oder Polymethylenmethacrylat (PMMA), auf die auf der dem Wannenboden zugewandten Seite eine Ethylentetrafluorethylen-Folie aufgeklebt ist, verwendet.

Die Erfindung wird im Folgenden anhand von Beispielen in den Figuren beschrieben, in denen:
Fig. 1 eine schematische Perspektivansicht von Komponenten einer Vorrichtung zur Durchführung eines erfindungsgemäßen Verfahrens zeigt,
Fig. 2 schematische Draufsichten auf Komponenten einer Vorrichtung zur Durchführung eines erfindungsgemäßen Verfahrens von oben als Sequenz von vier aufeinanderfolgenden Schritten während der Durchführung eines Verfahrens gemäß der Erfindung zeigt,
Fig. 3. entsprechende Draufsichten von oben als Sequenz von vier aufeinanderfolgenden Schritten während der Durchführung eines erfindungsgemäßen Verfahrens zeigt,
Fig. 4 eine Detailansicht im Schnitt durch einen Wannenboden und eine Rakel einer Vorrichtung zur Durchführung eines erfindungsgemäßen Verfahrens zeigt,
Fig. 5 eine teilweise geschnittene Draufsicht aus der Ebene A-A aus Fig. 4 auf Wannenboden und Rakel sowie auf der rechten Seite eine Draufsicht auf die entsprechenden Komponenten von oben zeigt,
Fig. 6 entsprechende Ansichten wie in Fig. 5 für eine alternative Ausführungsform zum Erzeugen einer Relativbewegung zwischen Rakel und Wanne,
Fig. 7 eine Schnittansicht durch einen Bereich des Wannenbodens mit geglätteter Baumaterialschicht darauf zeigt,
Fig. 8 eine Schnittansicht entsprechend Fig. 7 zeigt, wobei der Bereich des Wannenbodens in eine Position unterhalb eines Tintenstrahldruckers bewegt worden ist,
Fig. 9 eine Schnittansicht entsprechend Fig. 7 zeigt, wobei der Bereich des Wannenbodens den Bereich des Tintenstrahldruckers bereits verlassen hat und sich in Bewegung zu einem Baubereich findet, in dem oberhalb der Wanne eine Bauplattform und unterhalb des Wannenbodens eine Belichtungseinheit angeordnet ist,
Fig. 10 eine Schnittansicht entsprechend Fig. 7 zeigt, wobei der Bereich des Wannenbodens nun im Baubereich unterhalb einer Bauplattform in Position gebracht ist,
Fig. 11 eine Schnittansicht entsprechend Fig. 10 nach Herunterfahren der Bauplattform und bei der Belichtung der erzeugten Schicht des Baumaterials mit Einfärbemitteln zeigt und
Fig. 12 eine Schnittansicht entsprechend Fig. 10 und 11 nach Abschluss der Belichtung und Anheben der Bauplattform zeigt.

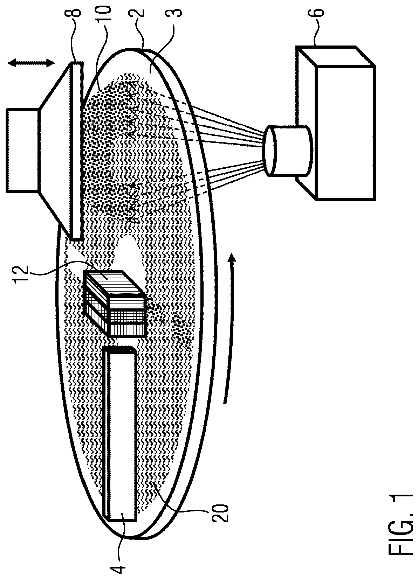

Fig. 1 zeigt eine schematische, stark vereinfachte Perspektivansicht von wesentlichen Komponenten einer Vorrichtung zur Durchführung eines erfindungsgemäßen Verfahrens. Die Vorrichtung umfasst eine drehbare Wanne 2, die zur Vereinfachung der Darstellung als Wannenboden 3 in Form einer Kreisscheibe ohne eine die Kreisscheibe eigentlich umgebende Seitenwand dargestellt ist. Der Wannenboden 3 ist zumindest in einem ringförmigen Bereich, in dem eine Belichtungseinheit 6 ein Baugebiet belichten kann, transparent ausgebildet. Gegenüberliegend zu der Belichtungseinheit 6 liegt oberhalb der Wanne 2 eine vertikal verfahrbare Bauplattform 8. An der Bauplattform 8 hängt bereits ein im Aufbau befindliches Bauteil 10.

Eine Rakel 4 ist in einstellbarer Lage oberhalb des Wannenbodens 3 aufgehängt. Die Wanne 2 ist um eine mitten durch die Kreisschreibe des horizontalen Wannenbodens 3 verlaufende vertikale Drehachse drehbar. Es ist ein Drehantrieb vorhanden (nicht gezeigt), der gesteuert von einer ebenfalls nicht gezeigten Steuereinheit die Wanne 2 dreht und in von der Steuereinheit vorgegebenen Positionen anhält. Entgegengesetzt der Drehrichtung der Wanne 2, die durch den Pfeil angedeutet ist, ist vor der Rakel 4 eine Ausgabeeinrichtung für viskoses Baumaterial angeordnet (in Fig. 1 nicht gezeigt), die viskoses Baumaterial ausgibt. Dabei kann es sich zum Beispiel um eine Kartusche handeln, aus der ein angetriebener Kolben Baumaterial durch eine Ausgabetülle ausgeben kann. Aufgrund der Drehung der Wanne 2 staut sich das Baumaterial vor der Rakel 4. Durch die Drehung der Wanne 2 wird ein Teil des ausgegebenen Baumaterials unter der Rakel 4 hindurch bewegt, um so eine geglättete Schicht 20 mit einer durch die Lage der Rakel 4 zum Wannenboden 3 vorbestimmten, gleichmäßigen Schichtdicke zu formen.

Etwa 90° in Umfangsrichtung zur Rakel 4 versetzt ist oberhalb der Wanne 2 ein Tintenstrahldrucker 12 beweglich aufgehängt. Der Tintenstrahldrucker 12 dient dazu, nach Stoppen der Drehung der Wanne 2 auf ein vorgegebenes Gebiet der geglätteten Schicht 20 ortsselektiv Einfärbemittel aufzubringen, um für die nächste auszuhärtende Schicht eine gewünschte ortsselektive Einfärbung zu erhalten.

Nach Abschluss des Druckvorgangs durch den Tintenstrahldrucker 12 wird die Wanne 2 um 90° weitergedreht, so dass das von dem Tintenstrahldrucker mit Einfärbemitteln bedruckte Gebiet der geglätteten Schicht 20 in den Bereich zwischen Belichtungseinheit 6 und Bauplattform 8 kommt. Dann wird die Bauplattform 8 in Bezug auf die Oberfläche des Wannenbodens 3 unter Steuerung der Steuereinheit so weit abgesenkt, dass die untere Oberfläche der Bauplattform (im Falle der ersten an der Bauplattform auszuhärtenden Schicht) oder die untere Oberfläche der zuletzt ausgehärteten Schicht des im Aufbau befindlichen Bauteils 10 auf einen Abstand zum Wannenboden, der gleich der vorgegebenen Schichtdicke ist, gebracht wird, so dass unter Verdrängung von Baumaterial aus dem Zwischenraum eine verbleibende Schicht mit einer vorgegebenen Schichtdicke erzeugt wird. Erfindungsgemäß ist die Lage der Rakel 4 über dem Wannenboden 3 so eingestellt, dass die geglättete Schicht 20 bereits nahe an und gegebenenfalls nur geringfügig oberhalb der vorgegebenen Schichtdicke ist. Dazu ist die Lage der Rakel zum Wannenboden so eingestellt, dass die nach dem Passieren der Rakel resultierende vorbestimmte, gleichmäßige Schichtdicke im Bereich von 100% bis 150% der durch Herunterfahren der Bauplattform einzustellenden, vorgegebenen Schichtdicke beträgt. Wie oben erläutert hat es eine Reihe von Vorteilen, wenn die Menge von beim Einstellen der Schichtdicke durch Herunterfahren der Bauplattform zu verdrängendem Baumaterial klein, im Idealfall verschwindend klein ist.

Nach Einstellen der vorgegebenen Schichtdicke durch gesteuertes Absenken der Bauplattform relativ zum Wannenboden wird die in dem Zwischenraum definierte Schicht von mit Einfärbemitteln bedrucktem Baumaterial durch ortselektive Belichtung durch die Belichtungseinheit 6 durch den Wannenboden hindurch belichtet und ausgehärtet. Anschließend wird die Bauplattform 8 mit dem daran hängenden, im Aufbau befindlichen Bauteil 10 angehoben, so dass sich die aktuell ausgehärtete Schicht vom Wannenboden 3 löst und abgehoben wird.

Der Betrieb des Tintenstrahldruckers 12 und der Belichtungseinheit 6 werden von einer nicht dargestellten Steuereinheit gesteuert, in der die dreidimensionalen Formdaten des aufzubauenden Formkörpers gespeichert sind, und zwar auch als Daten der Konturformen der einzelnen, sukzessive aufzubauenden Schichten und der Verteilung von Einfärbemitteln in dem Gebiet der jeweils auszuhärtenden Schicht.

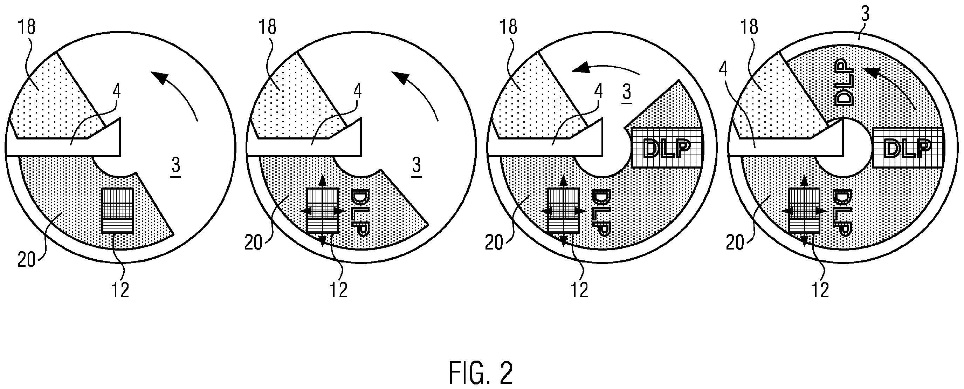

Fig. 2 zeigt eine Sequenz von Verfahrensschritten als schematische Draufsicht auf eine Vorrichtung wie in Fig. 1 von oben, wobei die Sequenz eine Folge von vier Arbeitsschritten bei der Durchführung eines erfindungsgemäßen Verfahrens illustriert. Im ersten Schritt, der ganz links in Fig. 2 dargestellt ist, wird die Wanne um die zum Wannenboden 3 senkrechte, vertikale Drehachse entgegengesetzt dem Uhrzeigersinn gedreht. Gleichzeitig wird Baumaterial, z.B. keramikgefülltes photopolymerisierbares Material, z.B. aus einer Kartusche, in Drehrichtung stromaufwärts der Rakel 4 auf den Wannenboden ausgegeben, so dass dort ein gewisser Rückstau an Baumaterial 18 entsteht. Durch die Drehung des Wannenbodens 3 wird Baumaterial unter der Rakel 4, die in einstellbarer Lage über dem Wannenboden 3 aufgehängt ist, hindurch bewegt, so dass durch die Unterkante der Rakel eine geglättete Schicht 20 mit einer durch die Lage der Rakel 4 zum Wannenboden 3 vorbestimmten, gleichmäßigen Schichtdicke geformt wird. Die geglättete Schicht 20 wird durch Drehen der Wanne bis in einen Bereich unter dem Tintenstrahldrucker 12 bewegt, der um 90° gegenüber der Rakel 4 entgegen dem Uhrzeigersinn versetzt ist. Sobald das Gebiet der geglätteten Schicht 20, das später das Baugebiet zum Aushärten einer weiteren Schicht bilden soll, den Bereich unter dem Tintenstrahldrucker 12 erreicht hat, wird die Wanne angehalten. In dieser Phase wird die Baumaterialschicht durch den Tintenstrahldrucker 12 mit Einfärbemitteln ortsselektiv bedruckt. Das Ergebnis der Aufbringung von Einfärbemitteln ist schematisch in der zweiten Darstellung von links in Fig. 2 gezeigt, worin die aufgedruckten Buchstaben DLP die ortselektiv aufgebrachten Einfärbemittel symbolisieren sollen (natürlich werden bei Verfahren zur Herstellung von Dentalprodukten in der Regel keine diskreten Farbstrukturen wie Buchstaben, sondern kontinuierlich variierende Einfärbungen aufgebracht). Die bewegliche Aufhängung des Tintenstrahldruckers 12 ist durch die gekreuzten Pfeile angedeutet, wobei der Tintenstrahldrucker durch die nicht dargestellte Steuereinheit kontrolliert verfahren wird, um so die ortsselektive Aufbringung von Einfärbemitteln im Baugebiet zu realisieren.

Anschließend wird die Wanne erneut um 90° entgegen dem Uhrzeigersinn gedreht und dann wieder angehalten, wobei dieser Zustand in der zweiten Darstellung von rechts in Fig. 2 dargestellt ist. Durch diese Drehung gelangt der in dem vorhergehenden Schritt mit Einfärbemitteln versehene Bereich, symbolisiert durch DLP, zu der der Rakel 4 gegenüberliegenden Belichtungseinheit und wird dort, nach Herunterfahren der Bauplattform zum Einstellen der vorgegebenen Schichtdicke, durch Belichten ortsselektiv ausgehärtet. Dies ist in Fig. 2 durch das der Rakel 4 gegenüberliegende Raster symbolisiert, dass Bildelemente (Pixel) der Belichtungseinheit andeutet. (Die Bauplattform ist in der Darstellung von Fig. 2 fortgelassen, damit das darunter befindliche Baugebiet sichtbar bleibt). Gleichzeitig mit der Belichtung ist durch den Tintenstrahldrucker 12 ein nächster Baubereich der nassen Schicht in der 6-Uhr-Stellung mit Einfärbemitteln bedruckt worden, die wiederum durch DLP symbolisiert sind. Bei der Drehung wird weiterhin kontinuierlich durch die Rakel 4 eine geglättete Schicht 20 mit der vorbestimmten, gleichmäßigen Schichtdicke geformt. Es sei noch einmal darauf hingewiesen, dass bei der Darstellung in Fig. 2 aus Darstellungsgründen die an sich oberhalb der Belichtungseinheit über dem Wannenboden befindliche Bauplattform fortgelassen ist, so dass das Belichtungsgebiet der Beleuchtungseinheit sichtbar ist.

Beim Übergang in den Zustand in der rechten Darstellung von Fig. 2 ist wiederum eine Drehung des Wannenbodens 3 um 90° erfolgt, wobei von der Rakel 4 weiter kontinuierlich eine geglättete Schicht 20 mit der vorbestimmten, gleichmäßigen Schichtdicke geformt wird. Nach der 90° Drehung wird wiederum in einem nächsten Baubereich durch den Tintenstrahldrucker 12 Einfärbemittel aufgebracht, während das zuvor in der zweiten Darstellung von rechts mit Einfärbemitteln versehene Baugebiet nun im Bereich der Belichtungseinheit in der 3-Uhr-Stellung in der rechten Darstellung von Fig. 2 liegt und dort nach Absenken der Bauplattform (nicht gezeigt) belichtet wird. Es sei in diesem Beispiel angenommen, dass das den Buchstaben DLP entsprechende Gebiet belichtet und ausgehärtet wird.

Das in der zweiten Darstellung von rechts belichtete Gebiet DLP ist in dem nachfolgenden Verfahrensstadium in der rechten Darstellung von Fig. 2 in die 12-Uhr-Stellung gedreht und ist hier als ein durch die Buchstabenfolge DLP symbolisiertes Gebiet dargestellt, in dem der Wannenboden sichtbar ist, da nach Aushärtung dieses Gebiets die Bauplattform wieder angehoben wird, wodurch, da die Bauplattform in Fig. 2 nicht dargestellt ist, das zurückbleibende Negativbild der ausgehärteten Schicht in der Schicht 20 zurückgeblieben ist, d.h. nach Anheben der Bauplattform zusammen mit dem zuletzt ausgehärteten Gebiet in Form der Buchstabenfolge DLP bleibt dieses Gebiet als Negativbild oder Loch in der Schicht 20 zurück.

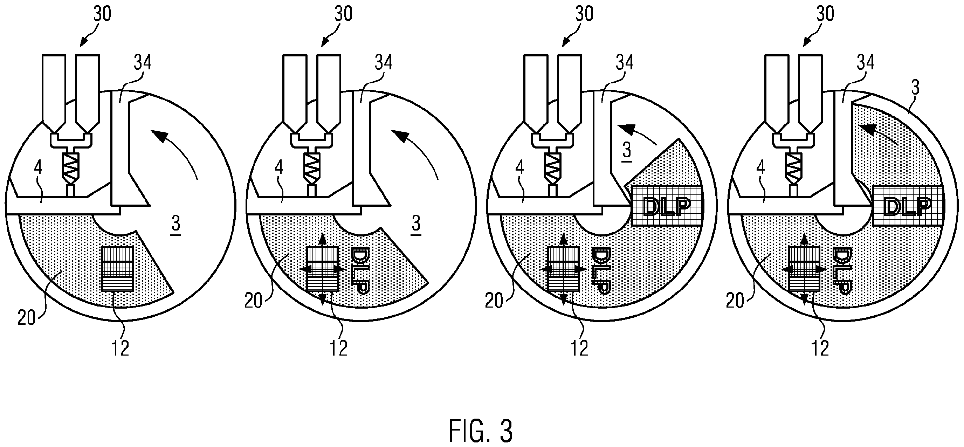

Fig. 3 zeigt eine Fig. 2 entsprechende Sequenz von Verfahrensstadien bei der Durchführung eines erfindungsgemäßen Verfahrens, wobei die Vorrichtung zur Durchführung dieses Verfahrens sich in folgenden Punkten von der in Fig. 2 skizzierten unterscheidet. In Fig. 3 ist eine in Fig. 2 nicht gezeigte Baumaterial-Zufuhreinrichtung 30 dargestellt, die zwei Kartuschen mit unterschiedlichen Baumaterialien aufweist. Die Kartuschen sind an eine gemeinsame Mischvorrichtung angeschlossen durch die eine eingestellte Mischung von Baumaterialien vorbereitet und ausgegeben wird. Die Rakel 4 ist in diesem Fall als Doppelrakel ausgeführt, d.h. sie weist zwei parallele Rakel auf, zwischen denen ein unten offener Hohlraum gebildet ist. Das Baumaterial wird durch die Zufuhreinrichtung und die Mischvorrichtung direkt in den Hohlraum zwischen den Rakeln der Doppelrakel gefördert. Die Lage der in Drehrichtung der Wanne stromabwärts liegenden Rakel zum Wannenboden ist wiederum so eingestellt, dass eine geglättete Schicht 20 mit einer durch die Lage der Rakel 4 zum Wannenboden vorbestimmten, gleichmäßigen Schichtdicke geformt wird.

In der 12-Uhr-Stellung ist eine Vakuumrakel 34 angebracht, die ebenfalls als Doppelrakel mit einem unten offenen Hohlraum dazwischen ausgeführt ist. Der Hohlraum der Vakuumrakel 34 wird unter Unterdruck gehalten, so dass nach dem Belichtungsschritt in der 3-Uhr-Stellung zurückgebliebenes Baumaterial durch die Vakuumrakel 34 aufgesaugt wird.

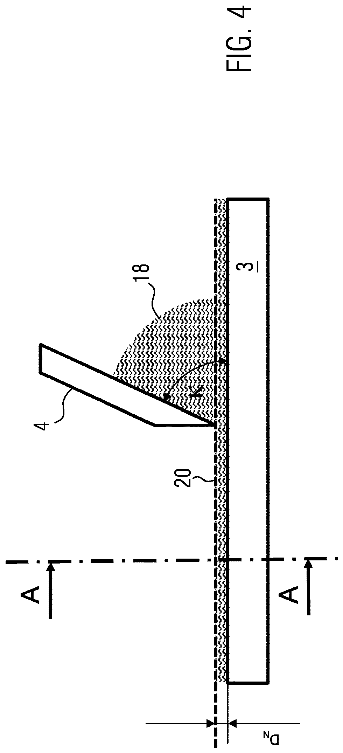

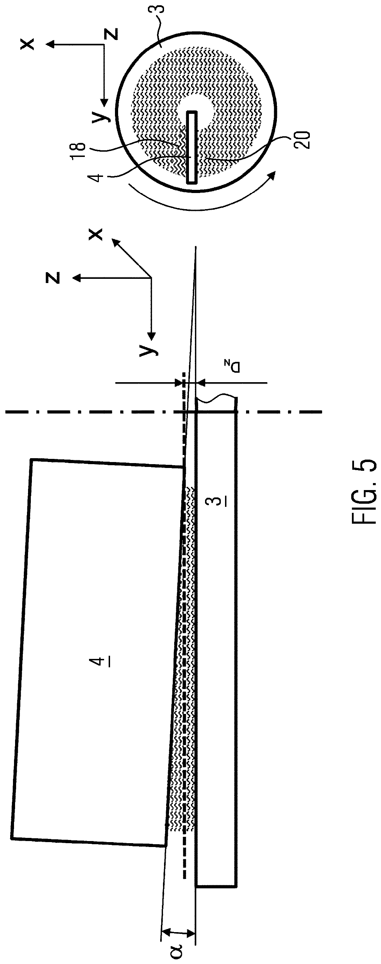

Mit Bezug auf die Figuren 4 und 5 wird nun eine Ausführungsform der einstellbaren Rakel zur Erzeugung der geglätteten Schicht 20 mit einer durch die Lage der Rakel 4 zum Wannenboden vorbestimmten, gleichmäßigen Schichtdicke beschrieben. In Fig. 5 ist in der rechten Darstellung eine schematische Draufsicht auf den Wannenboden 3 von oben dargestellt. Die Längsrichtung der Rakel 4 verläuft hier von einem Startpunkt nahe an der Drehachse des kreisförmigen Wannenbodens 3 radial nach außen bis nahe an den äußeren Umfang des kreisscheibenförmigen Wannenbodens 3. In Fig. 4 ist eine Schnittdarstellung durch die Rakel 4 und den Wannenboden 3 gezeigt, wobei die Schnittebene eine Ebene senkrecht zur in Fig. 5 sichtbaren radialen Längsrichtung Rakel 4 ist. Wie in der Darstellung von Fig. 4 zu erkennen ist, steht die Klinge der Rakel 4 nicht senkrecht zum Wannenboden 3, sondern ist zu diesem in einem Zustellwinkel κ geneigt. Der Zustellwinkel ist ein spitzer Winkel, vorzugsweise im Winkelbereich von 30° bis 75°, wobei die Rakel 4 in diesem Zustellwinkel κ so geneigt ist, dass der Zustellwinkel zur relativen Bewegungsrichtung der Rakel zum Wannenboden so liegt, dass die untere Kante der Rakel 4 in Richtung der relativen Bewegung der Rakel 4 zum Wannenboden hinter einer oberen Kante der Rakel 4 herläuft. Mit Bezug auf Fig. 4 bedeutet dies, dass die Richtung der relativen Bewegung der Rakel 4 zum Wannenboden 3 nach rechts gerichtet ist, wobei dann die untere Kante der Rakel 4 hinter deren Oberkante bei der relativen Bewegung der Rakel zum Wannenboden herläuft. In Bewegungsrichtung der Rakel 4 relativ zum Wannenboden 3 vor der Rakel 4 staut sich auf den Wannenboden ausgegebenes Baumaterial 18. Die Lage der Rakel zum Wannenboden ist so eingestellt, dass der Teil des Baumaterials, der den Zwischenraum zwischen Wannenboden und Unterkante der Rakel passiert zu einer geglätteten Schicht 20 mit durch die Lage der Rakel zum Wannenboden 3 vorbestimmten, gleichmäßigen Schichtdicke D_{N} geformt wird. Der beschriebene Zustellwinkel bewirkt einen Trichtereffekt, d.h. Baumaterial wird durch die relative Bewegung der geneigten Rakel zu dem Spalt zwischen Rakelunterkante und Wannenboden hin gedrückt.

Bei der hier schon beschriebenen Ausführungsform der Vorrichtung mit einer drehbaren Wanne 2 und einer sich nicht mitdrehenden Rakel 4 ist es von Vorteil, noch einen weiteren Winkel einzustellen, der nun im Zusammenhang mit Fig. 5 erläutert wird. Fig. 5 zeigt eine Draufsicht aus der in Fig. 4 dargestellten Ebene A-A, d.h. die Blickrichtung ist in x-Richtung auf die Seite der Rakel 4 gerichtet. Die Lage der Rakel 4 zum Wannenboden wird durch den Verlauf der mit der Unterkante der Rakel 4 zusammenfallenden Geraden definiert. Die mit der Unterkante der Rakel 4 zusammenfallende Gerade verläuft im Wesentlichen radial zu der drehbaren Wanne 2, jedoch nicht parallel zur Oberfläche des Wannenbodens 3, sondern in einem Haltewinkel a, der größer als 0° und kleiner als 15° ist, geneigt zur Oberfläche des Wannenbodens, so dass der Abstand der Unterkante der Rakel 4 zum Wannenboden 3 von einem Minimalabstand ausgehend mit zunehmenden radialen Abstand zur Drehachse ansteigt. Die Einstellung eines solchen Haltewinkels α ist bei einer rotierenden Wanne notwendig, da mit zunehmendem radialem Abstand von der Drehachse zunehmend mehr Baumaterial benötigt wird, da mit wachsendem radialen Abstand die Fläche, auf der das Baumaterial zu verteilen ist, anwächst. Anders ausgedrückt, ist die relative Geschwindigkeit von der Unterkante der Rakel zum Wannenboden eine mit dem radialen Abstand zur Drehachse linear wachsende Größe, so dass bei größeren radialen Abständen entsprechend mehr Baumaterial benötigt wird, das dann aufgrund der relativ größeren Geschwindigkeit des Wannenbodens zur Rakel über eine größere Fläche zu verteilen ist. Es wurde beobachtet, dass sich stromaufwärts der Rakel entlang der gesamten Länge, über die im radialen Bereich Baumaterial ausgegeben wird, Material an der Rakelklinge staut. Es hat sich ferner gezeigt, dass in dieser Ausführungsform mit einer sich drehenden Wanne die Schichtdicke in den radial weiter außen liegenden Bereichen auch durch den Abstand der Unterkante der Rakelklinge zum Wannenboden bestimmt wird, aber das vom Radius zur Drehachse abhängige Spaltmaß nicht gleich der resultierenden Schichtdicke ist, die geringer als das jeweilige Spaltmaß ist. Vielmehr sorgen die Materialeigenschaften wie Viskoelastizität des Baumaterials in Verbindung mit der Oberflächenspannung und dem Haftungsverhalten am Wannenboden dafür, dass das Baumaterial in weiter außen liegenden Bereichen aufgrund der höheren Relativgeschwindigkeit des Wannenbodens gewissermaßen in eine dünnere Schicht auseinander gezogen wird, als durch den Abstand der Rakelunterkante dort zum Wannenboden vorgegeben. Insofern muss bei einem Wechsel zu einem Baumaterial, dessen Eigenschaften sich in Bezug auf Viskosität, Oberflächenspannung und Haftungsvermögen am Wannenboden unterscheiden, die Lage der Rakel zum Wannenboden so angepasst werden, dass sich die gewünschte vorbestimmte und gleichmäßig Schichtdicke im gesamten Bereich des aufgebrachten Baumaterials ergibt. Hierbei hat sich herausgestellt, dass sich die optimale Lage der Rakel zum Wannenboden mit einer einstellbaren Halterung, die Höhe und Haltewinkel der Rakelunterkante kontinuierlich über Stellantriebe einstellbar macht, durch Variieren der Lage der Rakel schnell auffinden lässt.

Die vorgegebene Schichtdicke, die durch Herunterfahren der Bauplattform unter Verdrängung von Baumaterial eingestellt wird, liegt bei typischen Bauverfahren im Bereich zwischen 20 µm und 100 µm, z.B. beträgt die vorgegebene Schichtdicke 50 µm. Um durch die Rakel eine darüber liegende, aber maximal um 50% der vorgegebenen Schichtdicke darüber liegende, gleichmäßige Schichtdicke einer geglätteten Schicht zu erzeugen, ist es notwendig, eine verstellbare Aufhängung der Rakel zu realisieren, die es ermöglicht, einen Minimalabstand der Unterkante der Rakel 4 zum Wannenboden 3 und die beiden oben im Zusammenhang mit den Figuren 4 und 5 beschriebenen Winkel exakt und reproduzierbar einzustellen, ohne dass es während des Betriebs zu Veränderungen der Einstellungen kommen kann. Dies kann zum Beispiel mithilfe von zwei Positioniertischen erfolgen, die die für hochpräzise Einstellungen der Tischpositionen ausgelegt sind und die eine gekoppelte Halterung für die Rakel bilden. Die Positioniertische sind miteinander verbunden. Ein Positioniertisch dient zur Einstellung des Minimalabstandes der Rakelunterkante zum Wannenboden und der andere stellt über ein Goniometer den Haltewinkel α (siehe Fig. 4) der Rakelunterkante zum Wannenboden ein.

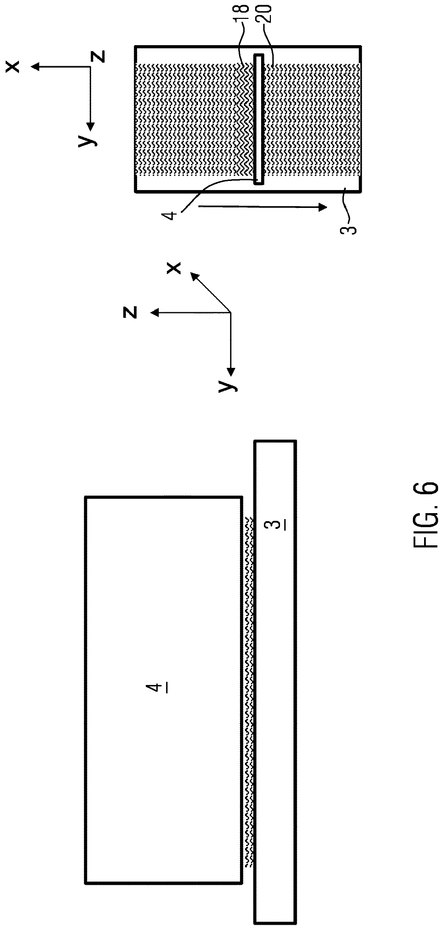

In Fig. 6 ist eine alternative Realisierung der relativen Beweglichkeit der Rakel 4 zum Wannenboden 3 illustriert. In diesem Fall wird ein rechteckiger Wannenboden 3 verwendet, der rechts in Fig. 6 in Draufsicht von oben (Sicht in z-Richtung) gezeigt ist. In diesem Fall ist die Wanne linear beweglich in x-Richtung, was durch den Pfeil in der rechten Darstellung von Fig. 6 angedeutet ist. Im linken Teil von Fig. 6 ist eine Draufsicht auf Rakel und Wannenboden von der Seite (Sicht in x-Richtung) gezeigt. In diesem Fall ist die Rakel 4 so aufgehängt, dass ihre Unterkante parallel zur Oberfläche des Wannenbodens 3 verläuft und der Abstand der Unterkante der Rakel 4 zum Wannenboden 3 einstellbar ist. In diesem Fall ist der Abstand der Unterkante der Rakel zum Wannenboden überall gleich, da die Relativgeschwindigkeit von der Unterkante der Rakel zum Wannenboden überall gleich ist.

Wie im rechten Teil von Fig. 6 zu sehen ist, bildet sich in Bewegungsrichtung der Wanne vor der Rakel 4 ein Stau von ausgegebene Baumaterial 18, während in Bewegungsrichtung hinter der Rakel 4 eine geglättete Schicht 20 mit der vorbestimmten, gleichmäßigen Schichtdicke geformt ist. Zudem hat sich gezeigt, dass bei vielen Arten von Baumaterialien die real hinter der Rakel erzeugte Schichtdicke des aufgerakelten Baumaterials nicht dem Spaltmaß zwischen Rakelunterkante und Wannenboden entspricht, sondern geringfügig niedriger ist. Es hat sich dabei aber auch gezeigt, dass sich durch Variieren der Lage der Unterkante der Rakel, z.B. mittels von einer Steuereinrichtung gesteuerten Stellantrieben, schnell die richtige Einstellung der Lage der Rakel zum Wannenboden auffinden lässt, bei der sich die vorbestimmte, gleichmäßige Schichtdicke als Resultat ergibt.

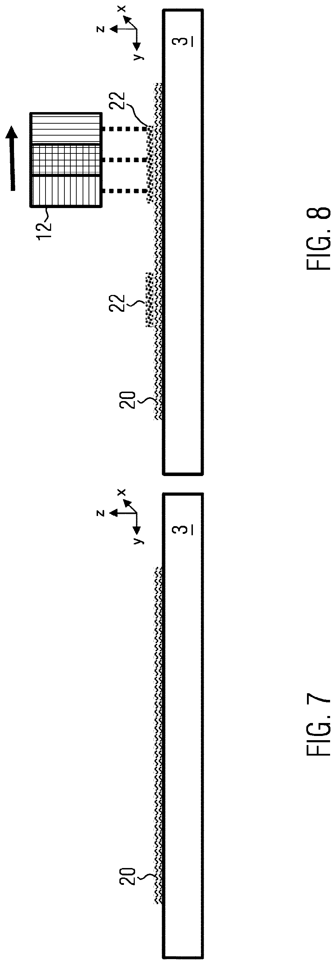

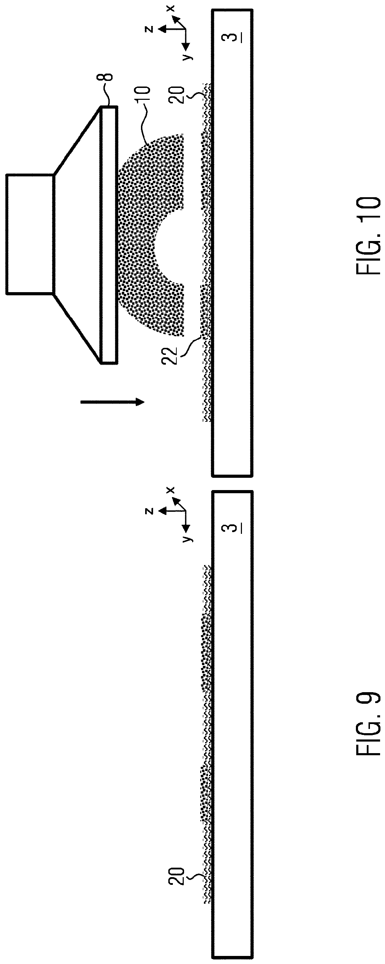

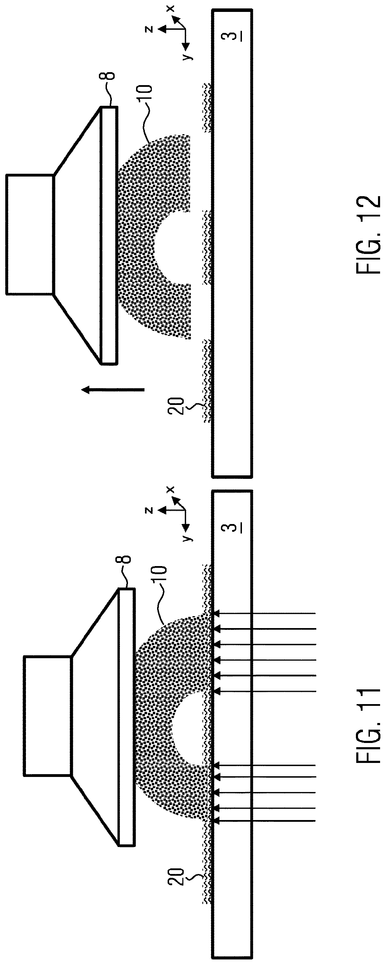

In den Figuren 7-12 ist eine andere Darstellung der Sequenz von Verfahrensschritten bei der Durchführung eines erfindungsgemäßen Verfahrens gezeigt. Fig. 7 zeigt schematisch eine Draufsicht auf einen Bereich des Wannenbodens 3, auf dem durch Einwirkung der Rakel 4 bereits die geglättete Schicht 20 mit vorbestimmter, gleichmäßiger Schichtdicke gebildet ist. Diese geglättete Schicht wird durch Drehung der Wanne in einen Bereich unter dem Tintenstrahldrucker 12 gebracht, wo die Drehung der Wanne gestoppt wird. Diesen Zustand zeigt die Draufsicht in Fig. 8, in der die Bewegung und der Betrieb des Tintenstrahldruckers 12 zur ortsselektiven Aufbringung von Einfärbemitteln 22 illustriert ist. Nach Abschluss des Betriebs des Tintenstrahldrucker wird die Wanne wieder gedreht, wobei Fig. 9 eine Momentaufnahme als Draufsicht auf die Wanne bei deren Drehung zeigt, wobei der zuvor in Fig. 8 mit Einfärbenmitteln versehene Bereich der Schicht 20 dargestellt ist. Die Drehung der Wanne wird fortgesetzt, bis der eingefärbte Schichtbereich das Baugebiet zwischen der Bauplattform 8 und der Belichtungseinheit erreicht. Dieser Zustand ist in Fig. 10 illustriert. In diesem Verfahrensschritt wird die Bauplattform 8 gesteuert durch die Steuereinrichtung durch einen Antrieb heruntergefahren, bis der Abstand zwischen der unteren Oberfläche der zuletzt aus gehärteten Schicht des im Aufbau befindlichen Bauteils 10 zur Oberfläche des Wannenbodens gleich der vorgegebenen Schichtdicke ist. Dieser Vorgang ist in Fig. 11 abgeschlossen, woraufhin die aktuell über dem Wannenboden 3 definierte Schicht durch gesteuerten Betrieb der Belichtungseinheit ortsselektiv ausgehärtet wird. Die so durch Belichtung aushärtende Schicht wird dabei an die zuletzt zuvor ausgehärtete Schicht anpolymerisiert, was einen festen Verbund der beiden Schichten ergibt und damit schließlich den Formkörper aus fest miteinander verbundenen Schichten ergibt.

Nach Abschluss des Belichtungsschrittes wird die Bauplattform 8 in Fig. 12 wieder angehoben, so dass das daran hängende, im Aufbau befindliche Bauteil 10 mit der zuvor in Fig. 11 daran zuletzt ausgehärteten Schicht angehoben wird. Am Wannenboden 3 bleiben dann in den ausgehärteten Bereichen der zuletzt ausgehärteten Schicht leere Bereiche oder Löcher zurück, wie in Fig. 12 zu sehen ist. Diese Bereiche werden beim Weiterdrehen der Wanne, wenn sie den Ausgabebereich von Baumaterial vor der Rakel passieren, wieder aufgefüllt.

Bei der Materialwahl für die Klinge der Rakel und für den Wannenboden und die Seitenwand der Wanne ist folgendes zu beachten. Für die Rakelklinge und die Seitenwand der Wanne ist PTFE (Polytetrafluorethylen) das am besten geeignete Material. Aufgrund seiner geringen Oberflächenenergie ist PTFE für alle Komponenten vorteilhaft, die in direkten Kontakt mit dem zu verarbeitenden Baumaterial kommen. Das zu verarbeitende Baumaterial haftet kaum an der Rakelklinge oder an der Seitenwand der Wanne. Bei Verwendung von Rakelklingen aus anderen Kunststoffen wie Polykarbonat oder Polyamid wurden hingegen Fehlstellen in der Beschichtung beobachtet.

Sollten Situationen eintreten, in denen die Rakel in direkten Kontakt mit der Seitenwand der Wanne kommt, kommen die hervorragenden Gleiteigenschaften von PTFE zum Tragen, so dass ein Blockieren des Drehmechanismus der Wanne in der Regel nicht eintritt. Gegenüber Lösungsmitteln und reaktiven Komponenten, sowie Farbstoffen in der Suspension ist PTFE chemisch inert. Die Steifigkeit von PTFE und dessen Verschleißfestigkeit gegenüber abrasiven keramischen Suspensionen sind ausreichend, so dass in Versuchen keine Verschleißeffekte beobachtet werden konnten.

Bei der Materialauswahl für den Wannenboden sind zwei Aspekte zu berücksichtigen. Der Wannenboden muss einerseits genügende Steifigkeit aufweisen. Zweitens muss die Oberfläche sehr glatt und eben sein. Drittens muss die Wannenoberfläche von den Baumaterialsuspensionen benetzbar sein. Dafür sind vor allem der Kontaktwinkel und die Viskosität des Baumaterials entscheidend. Diese Anforderungen wurden am besten durch eine Kombination von PMMA (Polymethylmetacrylat, Dicke: 3mm) und darüber ETFE (Ethylentetrafluorethylen, Dicke: 80µm) erfüllt. Für den Wannenboden kommen statt PMMA auch Glas oder ähnliche Materialien in Frage. Einschränkungen bei der Materialauswahl für den Wannenboden ergeben sich durch die zusätzlichen Anforderungen in Bezug auf die Transparenz für die Belichtung und in Bezug auf die Abzugskräfte im stereolithographischen Bauprozess. Die im Zusammenhang mit der vorliegenden Erfindung verwendete ETFE-Folie verfügt über eine selbstklebende Seite, die ein blasenfreies und ebenes Bekleben der PMMA-Grundscheibe ermöglicht. Ein in dieser Weise mit hoher Präzision ebener Wannenboden stellt eine Grundvoraussetzung für die Bildung einer dünnen Baumaterialschicht mithilfe der Rakel dar. Ebenso wie PTFE besitzt ETFE Inertheit gegenüber den verwendeten Chemikalien, mit denen die ETFE-Folie in Kontakt kommt. In Kombination mit von im Zusammenhang mit der vorliegenden Erfindung verwendeten Baumaterialformulierungen ließ sich auf ETFE im Vergleich zu FEP (Fluorethylenpropylen) ein niedrigerer Kontaktwinkel und somit eine bessere Benetzbarkeit erzielen.

Ein niedriger Kontaktwinkel (stellvertretend herangezogen für die Benetzbarkeit) korreliert gut mit einer niedrig einstellbaren Schichtdicke der Baumaterialschicht. Ist die Benetzbarkeit nicht gut genug, kommt es zum "Zerfließen" der Baumaterialschicht und zu "Inselbildung", da sich das Baumaterial dann lokal zusammenzieht. Es bilden sich Löcher in der Beschichtung und gegebenenfalls Tröpfchen. Diese Effekte lassen sich weitgehend durch eine erhöhte Viskosität der Baumaterialsuspension reduzieren oder verlangsamen. In Versuchen erwies sich eine Viskosität zwischen 10 und 50 Pa·s als geeignet für einen Kontaktwinkel bei typischen verwendeten Baumaterialien zwischen 50° und 60°.

Bei dem erfindungsgemäßen Verfahren wird die noch nasse Baumaterialschicht ortsselektiv mit Einfärbemitteln bedruckt, bevor die Bauplattform zu der Schicht heruntergefahren und die Schicht durch die Belichtungseinheit belichtet und ausgehärtet wird. Einfärbemittel müssen je nach Art des Materials ausgewählt werden, wobei folgende Zuordnungen festgelegt sind.

Bei ungefüllten und gefüllten Photopolymeren, dazu zählen auch keramikgefüllte Photopolymere, als Baumaterial werden als Einfärbemittel Lösungen mit Farbstoffmolekülen und/oder Suspensionen mit Pigmenten verwendet.

Bei der Verwendung von Glaskeramikschlickern als Baumaterial werden als Einfärbemittel Farbpigmente, insbesondere Oxide, Zinnoxide oder Zirkonoxide, dispergiert in einem organischen Träger, verwendet.

Bei Verwendung von ZrO₂-Schlicker als Baumaterial werden Nitralsalzlösungen (wässrige Lösungen oder auf Basis anderer Lösungsmittel) oder in Ethanol gelöste Acetylenacotonate verwendet.

## Patentansprüche

1. Verfahren zum Aufbau eines Formkörpers durch schichtweises Aushärten von viskosem, photopolymerisierbarem Baumaterial mittels Stereolithographie, bei dem
a) Baumaterial auf einen ebenen, transparenten Boden einer Wanne (2) ausgegeben wird,
b) die Wanne (2) relativ zu einer Rakel (4), die in einstellbarer Lage über dem Wannenboden (3) aufgehängt ist, parallel zur Ebene des Wannenbodens (3) bewegt wird, so dass ausgegebenes Baumaterial unter der Rakel (4) hindurch bewegt wird, um eine geglättete Schicht (20) mit einer durch die Lage der Rakel (4) zum Wannenboden (3) vorbestimmten, gleichmäßigen Schichtdicke zu formen,
c) die geglättete Schicht (20) durch relatives Bewegen der Wanne (4) zu einem Bereich zwischen einer unterhalb des Wannenbodens (3) angeordneten Belichtungseinheit (6) und einer oberhalb der Wanne höhenverfahrbar aufgehängten Bauplattform (8) gebracht wird,
d) die Bauplattform (8) relativ zum Wannenboden gesteuert abgesenkt wird, so dass unter Verdrängung von Baumaterial die verbleibende Schicht im Zwischenraum auf eine vorgegebene Schichtdicke gebracht wird,
e) die Schicht durch gesteuerten Betrieb der Belichtungseinheit (6) ortselektiv mit einer für die aktuelle Schicht gewünschten Kontur ausgehärtet wird,
f) wonach die Bauplattform (8) angehoben, Baumaterial auf den Wannenboden ausgegeben wird und die Schritte b) bis f) wiederholt werden, bis der Formkörper durch eine Vielzahl von übereinander ausgehärteten Schichten gebildet ist,
**dadurch gekennzeichnet, dass**
die die Lage der Rakel (4) zum Wannenboden (3) so eingestellt ist, dass die resultierende vorbestimmte, gleichmäßige Schichtdicke größer als die durch Herunterfahren der Bauplattform (8) einzustellende vorgegebene Schichtdicke ist, diese aber nicht um mehr als 50% davon überschreitet, und
dass die Oberfläche der geglätteten, dünnen Schicht in einem Zwischenschritt vor Absenken der Bauplattform (8) und vor der ortsselektiven Belichtung durch ortsselektives Aufbringen von ausgewählten Einfärbemitteln ortsselektiv eingefärbt wird, wobei die Einfärbemittel zur Einstellung der Farbe und der Transluzenz an das jeweils verwendete Baumaterial angepasst wie folgt ausgewählt sind:
a) bei Photopolymeren als Baumaterial: Lösungen mit Farbstoffmolekülen und/oder Suspensionen mit Pigmenten,
b) bei Glaskeramikschlicker als Baumaterial: Farbpigmente, insbesondere Oxide, Zinnoxide oder Zirkonoxide, dispergiert in einem organischen Träger,
c) bei ZrO₂-Schlicker als Baumaterial: Nitratsalzlösungen, wässrige Lösungen oder auf Basis anderer Lösungsmittel, oder in Ethanol gelöste Acetylacetonate.

2. Verfahren nach Anspruch 1, wobei die Lage der Rakel (4) zum Wannenboden (3) so eingestellt ist, dass die resultierende vorbestimmte, gleichmäßige Schichtdicke im Bereich von 110% bis 130% der vorgegebenen Schichtdicke liegt.

3. Verfahren nach einem der vorhergehenden Ansprüche, wobei die relative Bewegung von der Wanne (2) und der Rakel (4) durch Drehen der Wanne (2) um eine senkrecht zum Wannenboden (3) stehende, mittige Achse gegenüber einer ortsfest aufgehängten Rakel (4) oder durch Drehen der Rakel (4) um die genannte Achse relativ zu einer ortsfest gehaltenen Wanne (2) bewirkt wird.

4. Verfahren nach Anspruch 3, wobei die Lage der Rakel (4) über dem Wannenboden (3) durch den Verlauf einer mit einer geradlinigen Unterkante der Rakel (4) zusammenfallenden Geraden definiert ist durch einen Minimalabstand zum Wannenboden (3) am in radialer Richtung zur Drehachse nächsten Punkt der Rakelunterkante zur Drehachse, und durch einen Haltewinkel (α), der zwischen der Geraden der Unterkante und einer von der Geraden geschnittenen Ebene parallel zum Wannenboden (3) definiert ist und größer als 0° und kleiner als 15° ist, so dass der vertikale Abstand der Unterkante zum Wannenboden (3) vom Minimalabstand mit zunehmenden radialen Abstand zur Drehachse ansteigt.

5. Verfahren nach Anspruch 4, wobei die Rakel (4) eine ebene Rakelklinge aufweist und dass die Rakelklinge in einem Zustellwinkel (κ) zum Wannenboden (3) geneigt ist, wobei der Zustellwinkel (κ), der größer als 0° und kleiner als 90° ist, vorzugsweise im Bereich von 30° bis 75° liegt, und der Zustellwinkel relativ zur Bewegungsrichtung zwischen Wannenboden (3) und Rakel (4) so definiert ist, dass die Unterkante der Rakel (4) in Richtung der relativen Bewegung der Rakel (4) zum Wannenboden hinter einer oberen Kante der Rakel (4) herläuft.

6. Verfahren nach einem der Ansprüche 1 - 2, wobei die relative Bewegung von der Wanne (2) und der Rakel (4) durch lineares Verschieben der Wanne (2) oder durch lineares Verschieben der Rakel (4) bewirkt wird.

7. Verfahren nach Anspruch 6, wobei die Lage der Rakel (4) über dem Wannenboden (3) durch Verlauf einer mit einer geradlinigen Unterkante der Rakel (4) zusammenfallenden Geraden definiert ist, die in konstantem Abstand und parallel zum Wannenboden (3) verläuft.

8. Verfahren nach Anspruch 1, wobei die Einfärbemittel in einer Tinte gelöst und/oder dispergiert sind und durch einen Tintenstrahldrucker ortsselektiv auf die geglättete Schicht aufgebracht werden.

9. Verfahren nach Anspruch 1 oder 8, wobei die Einfärbemittel licht- oder thermisch-härtend ist und nach ortsselektivem Auftrag auf die geglättete Schicht durch elektromagnetische Strahlung fixiert wird, wobei die zum Fixieren verwendet elektromagnetische Strahlung außerhalb des Absorptionsspektrums des Photoinitiators des Baumaterials liegt.

10. Verfahren nach einem der vorhergehenden Ansprüche, wobei als Rakel eine Rakel (4) aus Polytetrafluorethylen verwendet wird und eine umlaufende Seitenwand der Wanne (2) aus Polytetrafluorethylen verwendet wird.

11. Verfahren nach einem der vorhergehenden Ansprüche, wobei als Wannenboden (3) eine Scheibe aus Glas oder Polymethylmethacrylat, auf die auf der dem Wannenboden zugewandten Seite eine Ethylen-Tetrafluorethylen-Folie aufgeklebt ist, verwendet wird.

## Claims

1. Method for building a shaped body by layer-wise solidification of viscous, photopolymerizable building material by means of stereolithography, wherein
a) building material is dispensed onto a planar, transparent bottom of a vat (2),
b) the vat (2) is moved relatively to a doctor blade (4) in a direction parallel to the plane of the vat bottom (3), which doctor blade is suspended with adjustable positioning above the vat bottom (3), such that dispensed building material is moved underneath the doctor blade (4), to thereby form a smoothed layer (20) having uniform layer thickness predetermined by the positioning of the doctor blade (4) relative to the vat bottom (3),
c) the smoothed layer (20) is brought by relative movement of the vat (4) to a region between an exposure unit (6) located underneath the vat bottom (3) and a building platform (8) suspended above the vat adjustable in height,
d) the building platform (8) is lowered relative to the vat bottom in a controlled manner so that, while displacing building material, the remaining layer in the gap is formed into a predefined layer thickness,
e) the layer is solidified in a spatially selective manner by controlled operation of the exposure unit (6) within a contour desired for the current layer,
f) whereafter the building platform (8) is raised, building material is dispensed onto the vat bottom, and steps b) to f) are repeated until the shaped body is build up by a plurality of layers solidified on top of each other,
**characterized in that**
the positioning of the doctor blade (4) with respect to the vat bottom (3) is adjusted in such a manner that the resulting predetermined, uniform layer thickness is higher than the predefined layer thickness to be set by lowering the building platform (8), but does not exceed the predefined layer thickness by more than 50%, and
the surface of the smoothed, thin layer is, in an intermediate step before lowering of the building platform (8) and before spatially selective exposure, colored by applying in a spatially selective manner selected coloring agents, wherein the coloring agents for setting the color and translucence are selected in a manner adapted to the currently used building material:
a) in case of photopolymers as building material: solutions including dye molecules and/or suspensions including pigments,
b) in case of slurries including glass ceramics as building material: color pigments, in particular oxide, tin oxide or zirconium oxide, dispersed in an organic medium,
c) in case of ZrO₂ slurries as building material: solutions of salts of nitrate, aqueous solutions or on the basis of another solvent, or acetyl acetonate dissolved in ethanol.

2. Method according to claim 1, wherein the position of the doctor blade (4) relative to the vat bottom (3) is adjusted in such a manner that the resulting predetermined, uniform layer thickness is in the range of 110% to 130% of the predefined layer thickness.

3. Method according to any of the preceding claims, wherein the relative movement of the vat (2) and the doctor blade (4) is effected by rotating the vat (2) about a central axis perpendicular to the vat bottom (3) with respect to a doctor blade (4) suspended in a stationary manner or by rotating the doctor blade (4) about the axis mentioned relative to a vat (2) which is stationary.

4. Method according to claim 3, wherein the position of the doctor blade (4) above the vat bottom (3) is defined by a straight line coinciding with a straight lower edge of the doctor blade is defined by a minimal distance to the vat bottom (3) at the point of the lower edge of the doctor blade which is closest to the axis of rotation, and by a sloping angle (α) which is defined by the straight line of the lower edge and a plane parallel to the vat bottom (3) which is intersected by a straight line, which sloping angle is larger than 0° and smaller than 15° so that the distance of the lower edge to the vat bottom (3) increases from the minimal distance with increasing radial distance to the axis of rotation.

5. Method according to claim 4, wherein the doctor blade (4), comprises a planar blade, and that the doctor blade is inclined at an inclination angle (κ) with respect to the vat bottom (3), wherein the inclination angle (κ) which is larger than 0° and lower than 90°, is preferably in the range of 30° to 75°, and the inclination angle is defined in relation to the direction of relative movement between vat bottom (3) and doctor blade (4) in such a manner that the lower edge of the doctor blade (4) in the direction of relative movement of the doctor blade (4) with respect to the vat bottom is trailing behind the upper edge of the doctor blade (4).

6. Method according to any of the claims 1 to 2, wherein the relative movement of the vat (2) and the doctor blade (4) is effected by linearly shifting the vat (2) or by linearly shifting the doctor blade (4).

7. Method according to claim 6, wherein the position of the doctor blade (4) above the vat bottom is defined by the run of a straight line coinciding with the lower edge of the doctor blade (4), which straight line runs at a constant distance to and parallel to the vat bottom (3).

8. Method according to claim 1, wherein the coloring agents are dissolved and/or dispersed in an ink and are applied in a spatially selective manner by an ink jet printer onto the smoothed layer.

9. Method according to any of the claims 1 or 8, wherein the coloring agents are light-curing or thermally curing and are, after spatially selective application onto the smoothed layer, fixed by electromagnetic radiation, wherein the electromagnetic radiation used for fixation is outside of the absorption spectrum of the photo initiator of the building material.

10. Method according to any of the preceding claims, wherein as doctor blade a doctor blade made of polytetrafluoroethylene is used and a circumferential side wall of the vat (2) made of polytetrafluoroethylene is used.

11. Method according to any of the preceding claims, wherein as vat bottom (3) a pane of glass or polymethyl methacrylate is used onto which on its surface facing the vat bottom an ethylene tetrafluoroethylene film is bonded.

## Revendications

1. Procédé d'élaboration d'un corps moulé grâce à un durcissement par couches d'un matériau d'élaboration photopolymérisable visqueux au moyen d'une stéréolithographie, dans lequel
a) du matériau d'élaboration est fourni sur le fond plat et transparent d'un bac (2) ;
b) le bac (2) est déplacé parallèlement au plan du fond de bac (3) par rapport à une racle (4) suspendue dans une position réglable au-dessus du fond de bac (3), de sorte que le matériau d'élaboration fourni est régalé sous la racle (4) afin de former une couche lissée (20) présentant une épaisseur de couche uniforme prédéterminée par la position de la racle (4) par rapport au fond de bac (3),
c) la couche lissée (20) est positionnée grâce à un déplacement relatif du bac (4) par rapport à une région située entre une unité d'exposition à la lumière (6) agencée sous le fond de bac (3) et une plate-forme d'élaboration (8) suspendue de manière à pouvoir être déplacée verticalement au-dessus du bac,
d) la plate-forme d'élaboration (8) est abaissée de manière commandée par rapport au fond de bac, de sorte que la couche restante est amenée à présenter au sein de l'espace intermédiaire une épaisseur de couche prédéterminée par déplacement du matériau d'élaboration,
e) la couche est durcie de manière sélectivement locale grâce à un fonctionnement commandé de l'unité d'exposition à la lumière (6) afin que la couche actuelle présente un contour souhaité,
f) après quoi la plate-forme d'élaboration (8) est soulevée, du matériau d'élaboration est fourni sur le fond de bac et les étapes b) à f) sont répétées jusqu'à ce que le corps moulé soit formé d'une pluralité de couches durcies les unes au-dessus des autres,
**caractérisé en ce que**,
la position de la racle (4) par rapport au fond de bac (3) est ajustée de sorte que l'épaisseur de couche uniforme prédéterminée résultante est supérieure à l'épaisseur de couche prédéterminée à ajuster par descente de la plate-forme d'élaboration (8) mais ne dépasse pas celle-ci de plus de 50 %, et
**en ce que** la surface de la couche mince lissée est colorée, de manière sélectivement locale lors d'une étape intermédiaire avant l'abaissement de la plate-forme d'élaboration (8) et avant l'exposition sélectivement locale à la lumière, grâce à une application sélectivement locale de colorants sélectionnés, dans lequel les colorants destinés à l'ajustement de la couleur et de la translucidité sont sélectionnés, d'une manière adaptée au matériau d'élaboration respectivement utilisé, comme détaillé ci-dessous :
a) dans le cas d'une utilisation de photopolymères comme matériaux d'élaboration : des solutions contenant des molécules de colorant et/ou des suspensions contenant des pigments,
b) dans le cas d'une utilisation de barbotines vitrocéramiques comme matériaux d'élaboration : des pigments colorés, en particulier des oxydes, des oxydes d'étain ou des oxydes de zirconium, dispersés au sein d'un support organique,
c) dans le cas d'une utilisation de barbotines à base de ZrO₂ comme matériaux d'élaboration : des solutions de sels de nitrate, des solutions aqueuses ou à base d'autres solvants, ou des acétylacétonates dissous dans l'éthanol.

2. Procédé selon la revendication 1, dans lequel la position de la racle (4) par rapport au fond de bac (3) est ajustée de sorte que l'épaisseur de couche uniforme prédéterminée résultante se situe dans la plage comprise entre 110 % et 130 % de l'épaisseur de couche prédéterminée.

3. Procédé selon l'une quelconque des revendications précédentes, dans lequel le déplacement relatif du bac (2) et de la racle (4) est provoqué par une rotation du bac (2) autour d'un axe central perpendiculaire au fond de bac (3) par rapport à une racle (4) suspendue de manière stationnaire ou par une rotation de la racle (4) autour dudit axe par rapport à un bac (2) maintenu de manière stationnaire.

4. Procédé selon la revendication 3, dans lequel la position de la racle (4) au-dessus du fond de bac (3) est définie grâce au tracé d'une ligne droite coïncidant avec un bord inférieur rectiligne de la racle (4), grâce à une distance minimale par rapport au fond de bac (3) au niveau d'un point du bord inférieur de racle qui, par rapport à l'axe de rotation, est proche de l'axe de rotation dans la direction radiale, et grâce à un angle de retenue (α) supérieur à 0° et inférieur à 15° et défini parallèlement au fond de bac (3) entre la ligne droite du bord inférieur et un plan coupé par la ligne droite, de sorte que la distance verticale du bord inférieur par rapport au fond de bac (3) augmente à partir de la distance minimale avec l'augmentation de la distance radiale par rapport à l'axe de rotation.

5. Procédé selon la revendication 4, dans lequel la racle (4) présente une lame de raclage plane, et **caractérisé en ce que** la lame de raclage est inclinée selon un angle d'approche (κ) par rapport au fond de bac (3), dans lequel l'angle d'approche (κ), qui est supérieur à 0° et inférieur à 90°, se situe de manière préférée dans la plage comprise entre 30° et 75°, et l'angle d'approche est défini entre le fond de bac (3) et la racle (4) par rapport à la direction de déplacement de sorte que le bord inférieur de la racle (4) s'étend derrière un bord supérieur de la racle (4) dans la direction du déplacement relatif de la racle (4) par rapport au fond de bac.

6. Procédé selon l'une quelconque des revendications 1-2, dans lequel
le déplacement relatif du bac (2) et de la racle (4) est provoqué par un déplacement linéaire du bac (2) ou par un déplacement linéaire de la racle (4).

7. Procédé selon la revendication 6, dans lequel
la position de la racle (4) au-dessus du fond de bac (3) est définie grâce au tracé d'une ligne droite coïncidant avec un bord inférieur rectiligne de la racle (4) et s'étendant à une distance constante et parallèlement au fond de bac (3).

8. Procédé selon la revendication 1, dans lequel
les colorants sont dissous et/ou dispersés dans une encre et sont appliqués sur la couche lissée de manière sélectivement locale grâce à une imprimante à jet d'encre.

9. Procédé selon la revendication 1 ou 8, dans lequel
le colorant est photodurci ou thermodurci et, après application sélectivement locale sur la couche lissée, est fixé par rayonnement électromagnétique, dans lequel le rayonnement électromagnétique utilisé pour la fixation est situé en dehors du spectre d'absorption du photoinitiateur du matériau d'élaboration.

10. Procédé selon l'une quelconque des revendications précédentes, dans lequel
une racle (4) en polytétrafluoroéthylène est utilisée comme racle et une paroi latérale circonférentielle du bac (2) en polytétrafluoroéthylène est utilisée.

11. Procédé selon l'une quelconque des revendications précédentes, dans lequel
un disque en verre ou en polyméthacrylate de méthyle, sur lequel un film d'éthylène-tétrafluoroéthylène est collé sur le côté opposé au fond de bac, est utilisé comme fond de bac (3).
